# EUROPEAN PATENT APPLICATION

(11) **EP 4 287 310 A1**
(43) Date of publication of application: **06.12.2023**
(21) Application number: 21923104.0
(22) Date of filing: 25.11.2021
(51) Int. Cl.: H01M 4/36, H01M 4/38, H01G 11/30

(54) **ACTIVE MATERIAL PARTICLE, ELECTROCHEMICAL ELEMENT, AND ELECTROCHEMICAL DEVICE**

(30) Priority: 29.01.2021 JP 2021013998
(71) Applicant: Panasonic Intellectual Property Management Co., Ltd., Osaka 571-0057 (JP)
(72) Inventor: UCHIDA Shuhei, Kadoma-shi, Osaka 571-0057 (JP); SATOU Yoshinori, Kadoma-shi, Osaka 571-0057 (JP)
(74) Representative: Novagraaf International SA
(86) International application number: PCT/JP2021/043116
(87) International publication number: WO 2022/163099

(57) **Abstract**

Active material particles include: composite particles each containing a lithium silicate phase, and a silicon phase dispersed in the lithium silicate phase; and a first coating covering at least part of surfaces of the composite particles. The first coating contains an oxide of a first element with oxygen vacancies, and a carbon material, and the first element is an element other than non-metallic elements.

## Description

### [Technical Field]

The present disclosure mainly relates to an improvement to active material particles.

### [Background Art]

With diversified use of electrochemical devices, improvements are required to various performances. In this regard, Patent Literature 1 proposes coating the surfaces of the positive electrode and the negative electrode with a metal oxide.

### [Citation List]

### [Patent Literature]

Patent Literature 1: Japanese Laid-Open Patent Publication No. 2017-97999

### [Summary of Invention]

### [Technical Problem]

As one of the performances of electrochemical devices, higher capacity is required. For example, regarding a lithium-ion secondary battery, studies have been made to use a silicon compound as a negative electrode material. It is also known that a silicon compound, when used as the negative electrode material, is more prone to corrosion than a carbon material, due to side reactions during battery operation. Therefore, even when using a silicon compound as the active material particles, it is required to suppress the deterioration in cycle characteristics of the electrochemical device. It is also required to improve the rate characteristics.

### [Solution to Problem]

One aspect of the present disclosure relates to active material particles, including: composite particles each containing a lithium silicate phase, and a silicon phase dispersed in the lithium silicate phase; and a first coating covering at least part of surfaces of the composite particles, wherein the first coating contains an oxide of a first element with oxygen vacancies, and a carbon material, and the first element is an element other than non-metallic elements.

Another aspect of the present disclosure relates to an electrochemical element, including: a current collector; and an active material layer supported on the current collector, wherein the active material layer contains the above-described active material particles.

Still another aspect of the present disclosure relates to an electrochemical device, including: a first electrode; a second electrode; and an electrolyte, wherein one of the first electrode and the second electrode is constituted of the above-described electrochemical element.

### [Advantageous Effects of Invention]

According to the present disclosure, the cycle characteristics and the rate characteristics of the electrochemical device can be improved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic cross-sectional view of an active material particle according to one embodiment of the present disclosure.
[FIG. 2] A schematic enlarged cross-sectional view of an essential part of the active material particle of FIG. 1.
[FIG. 3] A TEM image of an essential part of a cross section of an active material particle according to one embodiment of the present disclosure.
[FIG. 4] A detailed schematic cross-sectional view of an active material particle according to one embodiment of the present disclosure.
[FIG. 5] A partially cut-away schematic oblique view of a non-aqueous electrolyte secondary battery according to one embodiment of the present disclosure.
[FIG. 6] A flowchart of a method for producing active material particles according to one embodiment of the present disclosure.
[FIG. 7] A flowchart of a method for producing an electrochemical element according to one embodiment of the present disclosure.

### [Description of Embodiments]

### A. Active material particles

Active material particles according to an embodiment of the present disclosure include composite particles and a first coating covering at least part of surfaces of the composite particles. The composite particles each contain a lithium silicate phase, and a silicon phase dispersed in the lithium silicate phase. Hereinafter, the composite particles are sometimes referred to as "lithium silicate composite particles." The first coating contains an oxide of a first element with oxygen vacancies, and a carbon material. The first element is an element other than non-metallic elements.

With the first coating, the chemical stability of the lithium silicate composite particles can be enhanced while electrical conductivity is maintained. As a result, the cycle characteristics of the electrochemical device are improved. The oxide of the first element contained in the first coating contributes to suppressing the corrosion of the lithium silicate composite particles. The carbon material contained in the first coating contributes to improving the conductivity of the active material particles.

The presence of oxygen vacancies in the oxide of the first element contained in the first coating enhances the ion conductivity of the active material particles, allowing the absorption and release of lithium ions to proceed smoothly at the interface between the lithium silicate composite particles and the electrolyte. As a result, the rate characteristics of the electrochemical device are improved. The active material particles according to an embodiment of the present disclosure are preferably used as a negative electrode active material for lithium-ion secondary batteries.

The oxygen vacancies refer to a state in which oxygen atoms are missing in some of the oxygen sites in the crystal lattice in the oxide of the first element, forming vacancies. For analysis of the oxygen vacancies in the oxide of the first element, X-ray absorption near-edge structure (XANES) region analysis can be used.

The amount of oxygen vacancies in the oxide of the first element (e.g., the later-described value x in formula (1), value y in formula (2), value z in formula (3), and value u in formula (4)) can be determined by the following method.

The electrochemical device is disassembled, from which the electrode is taken out, to obtain a thin piece of sample (thickness: approx. 100 nm) of the active material layer for observation with a transmission electron microscope (TEM). An active material particle in the sample is observed with a TEM. The active material particle is subjected to elemental mapping by TEM-EDS analysis (energy dispersive X-ray spectroscopy), to confirm that the surface of the lithium silicate composite particle is covered with the first coating. XANES analysis is performed on a plurality of randomly selected points (e.g., 10 points) in one coating, to determine the averaged valence of the first element, based on which the amount of oxygen vacancies is determined. For example, in TiO₂₋ₓ, when the averaged valence of Ti is 3.8, the x of the amount of oxygen vacancies is 0.1. In the XANES analysis, it is to be confirmed whether an L-edge peak of the metal (first element) and a K-edge shoulder of O appear or not, to judge whether it is an appropriate valence or oxygen vacancies.

The first element is an element other than non-metallic elements and includes a metal element and a so-called semi-metal element. In the point that the effect of suppressing the corrosion of the lithium silicate composite particles is high, the first element preferably includes at least one element selected from the group consisting of Group III elements, Group IV elements, Group V elements, and Group VI elements of the periodic table. In particular, the first element preferably includes at least one selected from the group consisting of Al, Ti, Si, Zr, Mg, Nb, Ta, Sn, Ni, and Cr. Among them, the first element is more preferably Ti in that an oxide which is a high dielectric substance can be formed, and the rate characteristics are likely to be improved.

The oxide of the first element with oxygen vacancies may include an oxide represented by formula (1): MeO₂₋ₓ. In the formula (1), Me is at least one selected from the group consisting of Ti, Si, Zr, and Sn, and 0 < x ≤ 1.95. The x in the formula (1) may be 0.1 or greater and 1.9 or less, and may be 1.7 or greater and 1.9 or less.

The oxide of the first element with oxygen vacancies may include an oxide represented by formula (2): MeO_{1.5-y}. In the formula (2), Me is Al, and 0 < y ≤ 1.47. The y in the formula (2) may be 0.1 or greater and 1.45 or less, and may be 1.2 or greater and 1.45 or less.

The oxide of the first element with oxygen vacancies may include an oxide represented by formula (3): MeO_{1-z}. In the formula (3), Me is at least one selected from the group consisting of Mg and Ni, and 0 < z ≤ 0.9. The z in the formula (3) may be 0.1 or greater and 0.89 or less, and may be 0.7 or greater and 0.89 or less.

The oxide of the first element with oxygen vacancies may include an oxide represented by formula (4): MeO₃₋ᵤ. In the formula (4), Me is Cr, and 0 < u ≤ 2.1. The u in the formula (4) may be 0.1 or greater and 2.05 or less, and may be 1.8 or greater and 2.05 or less.

The oxide of the first element may contain two or more kinds of oxides. In this case, the oxides may be mixed together, or each of them may be in a layer.

### [Lithium silicate composite particles]

The lithium silicate composite particles included in the active material particles according to the present embodiment each include a lithium silicate phase, and a silicon phase dispersed in the lithium silicate phase.

The lithium silicate composite particles are usually present as secondary particles each comprising a plurality of primary particles aggregated together. At least part of the surface of the secondary particle is covered with the first coating. Each primary particle includes a lithium silicate phase and a silicon phase dispersed in the lithium silicate phase.

The particle diameter of the lithium silicate composite particles is not particularly limited. The average particle diameter of the lithium silicate composite particles may be, for example, 1 µm or more and 20 µm or less. The average particle diameter of the lithium silicate composite particles means a particle diameter at 50% cumulative volume (volume average particle diameter) in a particle size distribution measured by a laser diffraction and scattering method.

### (Lithium silicate phase)

The lithium silicate phase (hereinafter sometimes simply referred to as the silicate phase) has not so many sites that can react with lithium, and thus hardly causes new irreversible reactions during charge and discharge. Therefore, it exhibits excellent charge-discharge efficiency in the early stage of charge and discharge.

The silicate phase is an oxide phase containing Li, Si, and O. The atomic ratio of O to Si (= O/Si) in the silicate phase is, for example, greater than 2 and less than 3. When the O/Si is within this range, it is advantageous in terms of the stability and lithium ion conductivity.

The silicate phase is represented by, for example, Li₂ᵥSiO₂₊ᵥ, where v is 0 < v < 1. In terms of the stability, ease of production, lithium ion conductivity, and others, v = 1/2 is more preferred.

The silicate phase may further contain an element M. Here, M can be, for example, at least one selected from the group consisting of Be, Mg, Al, B, Zr, Nb, Ta, La, V, Y, Ti, P, Bi, Zn, Sn, Pb, Sb, Co, Er, F, and W. Among them, B has a low melting point, and is advantageous for improving the fluidity of molten silicate. Al, Zr, Nb, Ta, and La can improve the Vickers hardness while maintaining the ionic conductivity of the silicate phase. The content of the element M is, for example, 10 mol% or less, and may be 5 mol% or less, relative to the total amount of elements other than O contained in the silicate phase.

### (Silicon phase)

The silicon phase dispersed in the silicate phase has a particulate phase of silicon (Si) simple substance and is constituted of a single or multiple crystallites. The crystallite size of the silicon phase is not particularly limited. The crystallite size of the silicon phase is more preferably 10 nm or more and 30 nm or less, and still more preferably 15 nm or more and 25 nm or less. When the crystallite size of the silicon phase is 10 nm or more, the surface area of the silicon phase can be kept small, and the deterioration of the silicon phase accompanied by the generation of irreversible capacity hardly occurs. The crystallite size of the silicon phase is calculated using the Scherrer formula from the half width of a diffraction peak belonging to the Si (111) plane in an X-ray diffraction (XRD) pattern of the silicon phase.

In order to achieve a higher capacity and improved cycle characteristics, the content of the silicon phase in the lithium silicate composite particles is, for example, 30 mass% or more and 80 mass% or less. By setting the content of the silicon phase to 30 mass% or more, the proportion of the silicate phase is reduced, and the initial charge-discharge efficiency can be easily improved. By setting the content of the silicon phase to 80 mass% or less, it becomes easier to reduce the degree of expansion and contraction of the lithium silicate composite particles during charge and discharge.

### (Carbon phase)

The lithium silicate composite particles may each contain a carbon phase, together with the silicate phase and the silicon phase. The carbon phase is, for example, covering at least part of the surface of the silicon phase, and present at at least part of the interface between adjacent primary particles.

The content of each element contained in the lithium silicate composite particles can be calculated by, for example, SEM-EDS analysis using a powder sample of the lithium silicate composite particles in a discharged state. The powder sample is analyzed and measured for the spectral intensity of each element. Subsequently, commercially available standard samples of elements are used to create a calibration curve, from which the content of each element contained in the silicate phase is calculated.

For the quantification of each element in the lithium silicate composite particles, ICP-AES analysis (inductively coupled plasma atomic emission spectroscopy), Auger electron spectroscopy (AES), laser ablation ICP mass spectroscopy (LA-ICP-MS), X-ray photoelectron spectroscopy (XPS), and the like can also be used.

### [First coating]

The first coating is covering at least part of the surfaces of the lithium silicate composite particles which are secondary particles.

The first coating includes an oxide of a first element with oxygen vacancies, and a carbon material. Usually, in the first coating, the oxide of the first element with oxygen vacancies and the carbon material are mixed together. The "mixed together" refers to, for example, a state in which the oxide of the first element has entered the gaps between particles of the carbon material. In this case, the corrosion of the lithium silicate composite particles can be suppressed by the first coating, while conductive paths are sufficiently formed in the first coating.

The first element may be present more abundantly as closer to the surface of the lithium silicate composite particles. This improves the effect of suppressing the corrosion of the lithium silicate composite particles. An average element ratio RA of the first element to the carbon material in the first coating is not particularly limited. The element ratio RA may be, for example, 0.01 or greater and 99 or less.

Due to poor electronic conductivity of the lithium silicate phase, the conductivity of the lithium silicate composite particles also tends to be low. By covering the surfaces of the lithium silicate composite particles with the first coating containing a conductive carbon material, the conductivity of the lithium silicate composite particles can be drastically enhanced.

Examples of the carbon material include amorphous carbon with low crystallinity, such as carbon black, coal, coke, charcoal, and activated carbon, and graphite with high crystallinity. Among them, amorphous carbon is preferred because of its low hardness and large buffering effect on the silicon phase that undergoes changes in volume during charge and discharge. The amorphous carbon may be graphitizable carbon (soft carbon), and non-graphitizable carbon (hard carbon). Examples of the carbon black include acetylene black and Ketjen black. The graphite means a material having a graphite-like crystal structure, examples of which include natural graphite, artificial graphite, and graphitized mesophase carbon particles.

The thickness of the first coating is not particularly limited. In view of the corrosion suppression, the thickness of the first coating may be 0.1 nm or more, may be 0.5 nm or more, and may be 1 nm or more. In view of the conductivity and the lithium ion diffusibility, the thickness of the first coating may be 50 nm or less, may be 10 nm or less, and may be 2 nm or less. The thickness of the first coating may be, for example, 0.1 nm or more and 50 nm or less, and may be 0.1 nm or more and 10 nm or less.

The thickness of the first coating can be measured by cross-sectional observation of the active material particles using a SEM or TEM.

First, the electrochemical device is disassembled, to take out an electrochemical element (e.g., an electrode), and a cross section of the element is obtained using a cross-section polisher (CP). From a SEM or TEM image of the cross section, ten active material particles having a maximum diameter of 5 µm or more are randomly selected. The thickness of the first coating is measured at any five points for each particle. An average of the thicknesses at a total of these 50 points is calculated. After calculating this average, with the data different by 20% or more from the obtained average excluded, an average is calculated again. This modified average is determined as a thickness T1_{A} of the first coating.

The starting point of the first coating is at the interface between the first coating and a base particle (see the description layer) formed of the lithium silicate composite particle. For example, the point where the intensity of the peak attributed to Li obtained by SEM-EDS analysis is 1/10 or less of the peak attributed to the first element can be regarded as the starting point of the first coating. The end point of the first coating can be regarded as a point where the intensity of the peak attributed to the first element obtained by SEM-EDS analysis is 5% or less of its maximum value. When a second coating is formed, the end point of the first coating is at the interface between the first coating and the second coating.

### [Second coating]

At least part of the first coating may be covered with a second coating having electrical conductivity. This further improves the conductivity of the active material particles.

The second coating, unlike the first coating, is substantially free of the oxide of the first element. The second coating being substantially free of the oxide of the first element means that the intensity of the peak attributed to the first element obtained by SEM-EDS is below the detection limit.

The second coating contains an electrically conductive material. The conductive material is preferably a conductive carbon material because of its electrochemical stability. As the conductive carbon material, a carbon material as contained in the first coating as described above can be used.

The thickness of the second coating is not particularly limited. The second coating is preferably thin enough not to substantially influence the average particle diameter of the lithium silicate composite particles. The thickness of the second coating may be 1 nm or more, and may be 5 nm or more. The thickness of the second coating may be 200 nm or less, and may be 100 nm or less. The thickness of the second coating, like that of the first coating, can be measured by cross-sectional observation of the lithium silicate composite particles using a SEM or TEM.

The starting point of the second coating is at the interface with the first coating. The end point of the second coating is at the outermost point of the active material particle that can be confirmed on a SEM or TEM image. The end point of the second coating is, alternatively, at a point where the intensity of the peak attributed to C obtained by SEM-EDS analysis is 5% or less of its maximum value.

The thickness T1_{A} of the first coating and the thickness T2_{A} of the second coating preferably satisfy the relationship of 0 < T2_{A}/T1_{A} < 1500. This makes it easy to achieve both the improvement in corrosion resistance and ion diffusibility and the enhancement in conductivity. The T2_{A}/T1_{A} is preferably 5 or greater, and is preferably 10 or greater. The T2_{A}/T1_{A} is preferably 500 or less, and is preferably 100 or less.

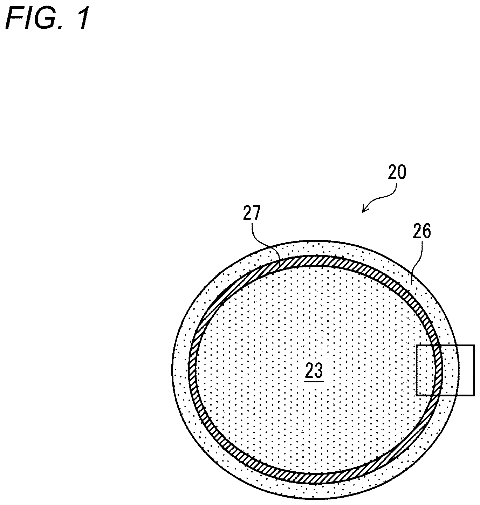

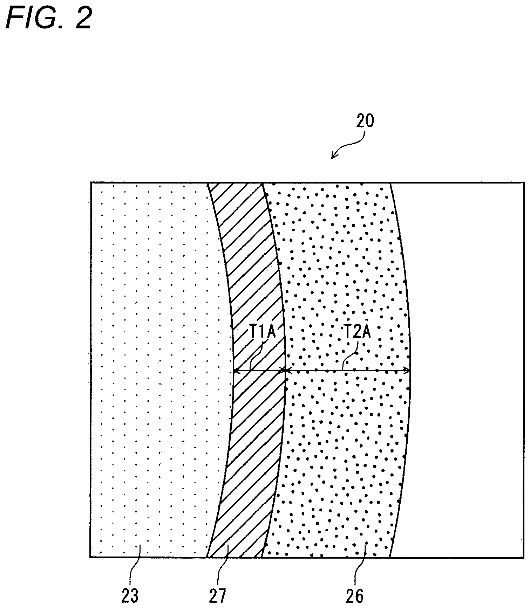

FIG. 1 is a schematic cross-sectional view of an active material particle according to one embodiment of the present disclosure. FIG. 2 is an enlarged schematic cross-sectional view of an essential part of the active material particle shown in FIG. 1.

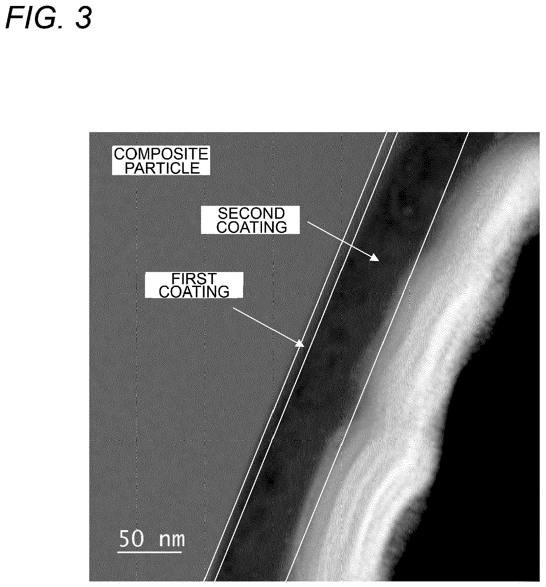

An active material particle 20 includes a lithium silicate composite particle 23, a first coating 27 covering the surface thereof, and a second coating 26 covering the first coating 27. FIG. 3 shows an example of a TEM image of an active material particle according to one embodiment of the present disclosure. The TEM image shown in FIG. 3 is of a part of the cross section of the active material particle, which is the part corresponding to FIG. 2.

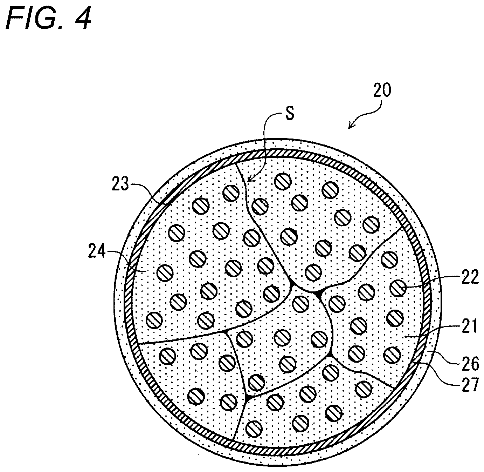

FIG. 4 is a detailed schematic cross-sectional view of an example of a cross section of the active material particle. The lithium silicate composite particle 23 is a secondary particle (base particle) of a plurality of primary particles 24 aggregated together. Each of the primary particles 24 includes a silicate phase 21 and silicon phases 22 dispersed in the silicate phase 21. The silicon phases 22 are dispersed substantially uniformly in the silicate phase 21.

At least part of interface S between the adjacent primary particles 24 has a carbon phase (not shown). The carbon phase may cover at least part of the surfaces of the silicon phases 22.

The surface of the lithium silicate composite particle (base particle) 23 is covered with the first coating 27. The first coating 27 is covered with the second coating 26.

### B. Electrochemical element

An electrochemical element according to an embodiment of the present disclosure includes a current collector, and an active material layer supported on the current collector. The active material layer contains the above-described active material particles. The electrochemical element as above is excellent in conductivity and slow in deterioration, and can thus provide an electrochemical device with high capacity and long life.

An example of the electrochemical element is an electrode. The electrode is, for example, at least one of a positive electrode and a negative electrode used in secondary batteries. The electrode according to an embodiment of the present disclosure is preferably used as a negative electrode for lithium-ion secondary batteries.

### C. Electrochemical device

An electrochemical device according to an embodiment of the present disclosure includes a first electrode, a second electrode, and a separator interposed therebetween. One of the first electrode and the second electrode is constituted of the above-described electrochemical element. The electrochemical device as above has high capacity and long life.

The electrochemical device is an apparatus in which electron transfer is allowed between substances, and, through the electron transfer, a chemical reaction is caused. Examples of the electrochemical device include a primary battery, a secondary battery, a capacitor, and an electric double layer capacitor. The electrochemical device according to an embodiment of the present disclosure is preferably a lithium-ion secondary battery including lithium silicate composite particles as a negative electrode active material.

In the following, with reference to a negative electrode and a lithium-ion secondary battery respectively taken as an example of the electrochemical element and an example of the electrochemical device according to embodiments of the present disclosure, the configurations thereof will be described.

### [Negative electrode]

The negative electrode includes, for example, a negative electrode current collector and a negative electrode active material layer.

The negative electrode active material layer contains a negative electrode active material. The negative electrode active material includes at least the above-described active material particles (hereinafter sometimes referred to as a first active material). The negative electrode active material layer is formed as a layer containing a negative electrode mixture on a surface of the negative electrode current collector. The negative electrode active material layer may be formed on one surface or both surfaces of the negative electrode current collector. The negative electrode mixture contains a negative electrode active material as an essential component, and can contain a binder, a conductive agent, a thickener, and the like as optional components.

The negative electrode active material may further contain another active material (hereinafter sometimes referred to as a second active material). As the second active material, for example, a conductive carbon material that electrochemically absorbs and releases lithium ions can be used. By using the first active material and the conductive carbon material in combination, a longer life can be expected.

Examples of the conductive carbon material include graphite, graphitizable carbon (soft carbon), and non-graphitizable carbon (hard carbon). Among them, graphite is preferred because of its excellent stability during charge and discharge and low irreversible capacity. The graphite means a material having a graphite-like crystal structure, examples of which include natural graphite, artificial graphite, and graphitized mesophase carbon particles. The conductive carbon material may be used singly or in combination of two or more kinds.

The particle diameter of the conductive carbon material is not particularly limited. The average particle diameter of the conductive carbon material may be, for example, 1 µm or more and 30 µm or less.

The proportion of the first active material in the total of the first and second active materials may be, for example, 3 mass% or more and 30 mass% or less. This makes it easy to achieve both high capacity and long life.

As the negative electrode current collector, a non-porous electrically conductive base material (e.g., metal foil), and a porous electrically conductive base material (e.g., mesh, net, punched sheet) can be used. The negative electrode current collector may be made of, for example, stainless steel, nickel, a nickel alloy, copper, and a copper alloy. The thickness of the negative electrode current collector is not particularly limited, but in view of the balance between strength and light weight of the negative electrode, the thickness is preferably 1 µm or more and 50 µm or less, more preferably 5 µm or more and 20 µm or less.

As the binder, for example, at least one selected from the group consisting of a polyacrylic acid, a polyacrylic acid salt, and derivatives thereof can be used. As the polyacrylic acid salt, a Li salt or Na salt is preferably used. Particularly preferred is a crosslinked lithium polyacrylate.

Examples of the conductive agent include: carbon blacks, such as acetylene black; conductive fibers, such as carbon fibers and metal fibers; fluorinated carbons; metal powders, such as aluminum; and conductive whiskers, such as zinc oxide and potassium titanate; conductive metal oxides, such as titanium oxide; and organic conductive materials, such as phenylene derivatives. These may be used singly or in combination of two or more kinds.

Examples of the thickener include: carboxymethyl cellulose (CMC) and modified products thereof (including salts such as Na salt), cellulose derivatives (e.g., cellulose ether), such as methyl cellulose; saponificated products of a polymer having a vinyl acetate unit, such as polyvinyl alcohol; polyether (e.g., polyalkylene oxide, such as polyethylene oxide). These may be used singly or in combination of two or more kinds.

### [Positive electrode]

The positive electrode includes, for example, a positive electrode current collector, and a positive electrode active material layer formed on the surface of the positive electrode current collector. The positive electrode active material layer may be formed on one surface or both surfaces of the positive electrode current collector.

The positive electrode active material layer is formed as a layer containing a positive electrode mixture on a surface of the positive electrode current collector. The positive electrode mixture contains a positive electrode active material as an essential component, and may contain a binder, a conductive agent, and the like as optional components.

As the positive electrode active material, a lithium composite metal oxide can be used. As the lithium composite metal oxide, for example, at least one selected from the group consisting of LiₐCoO₂, LiₐNiO₂, Li_{aM}nO₂, LiₐCO_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F can be used. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one selected from the group consisting of Mn, Fe, Co, and Ni). 0 ≤ a ≤ 1.2, 0 ≤ b ≤ 0.9, and 2.0 ≤ c ≤ 2.3.

As the binder and the conductive agent, those as exemplified for the negative electrode can be used. As the conductive agent, graphite, such as natural graphite and artificial graphite, may be used.

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

### [Electrolyte]

The electrochemical device according to an embodiment of the present disclosure further includes an electrolyte. The electrolyte includes, for example, a solvent, and a lithium salt dissolved in the solvent. The concentration of the lithium salt in the electrolyte is, for example, 0.5 mol/L or more and 2 mol/L or less. The electrolyte may contain a known additive.

The solvent may be aqueous or non-aqueous. As the non-aqueous solvent, for example, a cyclic carbonic acid ester, a chain carbonic acid ester, a cyclic carboxylic acid ester, and the like can be used. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). These non-aqueous solvents may be used singly or in combination of two or more kinds.

Examples of the lithium salt include a lithium salt of a chlorine-containing acid (e.g., LiClO₄, LiAlCl₄, LiB₁₀Cl₁₀), a lithium salt of a fluorine-containing acid (e.g., LiPF₆, LiBF₄, LiSbF₆, LiAsF₆, LiCF₃SO₃, LiCF₃CO₂), a lithium salt of a fluorine-containing acid imide (e.g., LiN(SO₂F)₂, LiN(CF₃SO₂)₂, LiN(CF₃SO₂)(C₄F₉SO₂), LiN(C₂F₅SO₂)₂), and a lithium halide (e.g., LiCI, LiBr, Lil). These lithium salts may be used singly or in combination of two or more kinds.

### [Separator]

A separator may be interposed between the positive electrode and the negative electrode. The separator is excellent in ion permeability and has moderate mechanical strength and electrically insulating properties. As the separator, for example, a microporous thin film, a woven fabric, a nonwoven fabric, and the like can be used. The separator is preferably made of, for example, polyolefin, such as polypropylene and polyethylene.

In an exemplary structure of the secondary battery, an electrode group formed by winding the positive electrode and the negative electrode with the separator interposed therebetween is housed together with the electrolyte in an outer body. The wound-type electrode group may be replaced with a stacked-type electrode group formed by stacking the positive electrode and the negative electrode with the separator interposed therebetween. Other different form of electrode groups may be adopted. The secondary battery may be of any type, such as a cylindrical, prismatic, coin, button, or laminate type.

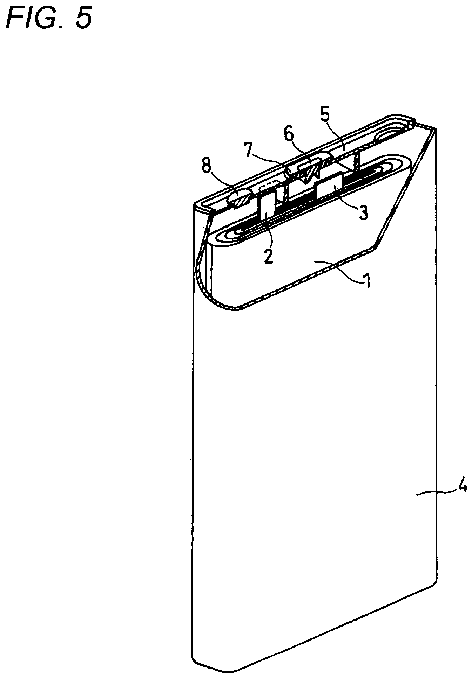

FIG. 5 is a partially cut-away schematic oblique view of a prismatic secondary battery according to one embodiment of the present disclosure. The battery includes a bottomed prismatic battery case 4, and an electrode group 1 and an electrolyte (not shown) housed in the battery case 4, and a sealing plate 5 sealing the opening of the battery case 4. The electrode group 1 has a long negative electrode, a long positive electrode, and a separator interposed therebetween. The negative electrode, the positive electrode, and the separator are wound around a flat plate-like winding core, from which the winding core is removed, forming the electrode group 1. The sealing plate 5 has a liquid inlet closed with a sealing plug 8, and a negative electrode terminal 6 electrically insulated via a gasket 7 from the sealing plate 5.

To the negative electrode current collector of the negative electrode, a negative electrode lead 3 is attached at its one end, by means of welding or the like. To the positive electrode current collector of the positive electrode, a positive electrode lead 2 is attached at its one end, by means of welding or the like. The negative electrode lead 3 is electrically connected at its other end to a negative electrode terminal 6. The positive electrode lead 2 is electrically connected at its other end to the sealing plate 5. A frame made of resin that separates the electrode group 1 from the sealing plate 5 and also separates the negative electrode lead 3 from the battery case 4 is disposed above the electrode group 1.

### D. Production method of active material particles

A method for producing active material particles according to an embodiment of the present disclosure includes: a preparation step of preparing lithium silicate composite particles each of which contains a silicate phase and a silicon phase dispersed in the silicate phase, and at least part of surfaces of which is covered with a carbon coating containing a carbon material; and a coating formation step of exposing the lithium silicate composite particles to a gas phase containing a first element other than non-metallic elements to introduce the first element into the carbon coating, to form a first coating containing an oxide of the first element and the carbon material on at least part of the surfaces of the lithium silicate composite particles. According to this production method, an oxide of the first element is introduced into the carbon coating covering the lithium silicate composite particles, and thus, a first coating is formed.

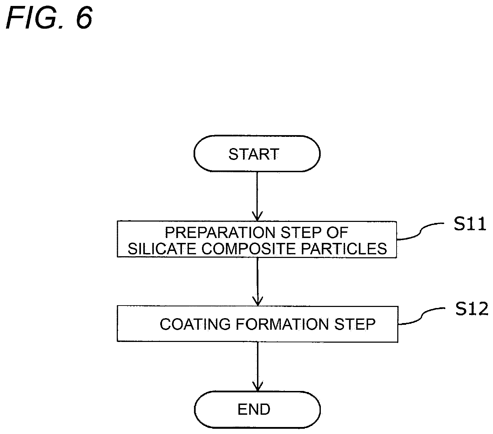

FIG. 6 is a flowchart of a method for producing active material particles according to one embodiment of the present disclosure.

### (i) Preparation step of lithium silicate composite particles (S11)

### (i-i) Preparation of silicon particles

First, silicon particles are prepared.

Silicon particles can be obtained by chemical vapor deposition method (CVD method), thermal plasma method, physical pulverization method, and other methods. Using the following methods, silicon nanoparticles having an average particle diameter of, for example, 10 nm or more and 200 nm or less can be synthesized. The average particle diameter of silicon particles means a particle diameter at 50% cumulative volume (volume average particle diameter) in a particle size distribution measured by a laser diffraction and scattering method.

### (a) Chemical vapor deposition method

In the CVD method, for example, a silane compound is oxidized or reduced in a gas phase, to produce silicon particles. The reaction temperature is set to, for example, 400 °C or higher and 1300 °C or lower.

As the silane compound, a silicon hydride, such as silane and disilane, a halogenated silane, an alkoxysilane, and the like can be used. Examples of the halogenated silane include dichlorosilane, trichlorosilane, and tetrachlorosilane. Examples of the alkoxysilane include tetramethoxysilane, tetraethoxysilane, and tetrabutoxysilane.

For example, when a silicon hydride is brought into contact with an oxidizing gas in a gas phase, a composite of silicon particles and silicon oxide particles can be obtained. That is, the atmosphere of the gas phase is an oxidizing gas atmosphere. Washing the composite, for example, with hydrofluoric acid can remove the silicon oxide, and thus, silicon particles can be obtained.

In the case of reducing a halogenated silane, an alkoxysilane, and the like, for example, a molten metal formed into fine particles by atomization is brought into contact with a silane compound. The molten metal that can be used include Na, K, Mg, Ca, Zn, and Al. For the atomization gas, an inert gas, halogenated silane, hydrogen gas, or the like is used. That is, the atmosphere of the gas phase is an inert gas or a reducing gas atmosphere.

### (b) Thermal plasma method

In the thermal plasma method, a raw material of silicon is introduced into a generated thermal plasma, to produce silicon particles in the high-temperature plasma. The thermal plasma is generated by arc discharge, high-frequency discharge, microwave discharge, laser beam irradiation, and the like. Among them, the high-frequency (RF) discharge, which is a non-polar discharge, is desirable in that silicon particles with little or no impurities can be produced.

As the raw material, for example, a silicon oxide can be used. When the raw material is introduced into plasma, silicon and oxygen in the form of atoms or ions are generated for an instance, and during cooling down, the silicon atoms are bonded together, and solidified to form silicon particles.

### (c) Physical pulverization method

In the physical pulverization method (mechanical milling method), coarse silicon particles are pulverized in a pulverizer, such as a ball mill or a bead mill. The interior of the pulverizer is set to, for example, an inert gas atmosphere.

### (i-ii) Coating of silicon particles with carbon phase

At least part of the surfaces of the silicon particles may be coated with a carbon phase.

As a method for coating the silicon particles with carbon phase, chemical vapor deposition (CVD), sputtering, atomic layer deposition (ALD), wet mixing, dry mixing, and other methods can be used. Preferred among them are a CVD method, a wet mixing method, and the like.

### (a) Chemical vapor deposition method

In the CVD method, silicon particles are introduced into a hydrocarbon-based gas atmosphere, followed by heating, to allow a carbon material produced through thermal decomposition of the hydrocarbon-based gas to deposit on the particle surfaces, and thus, a carbon phase is formed. The temperature of the hydrocarbon-based gas atmosphere is, for example, 500 °C or higher and 1000 °C or lower. For the hydrocarbon-based gas, a chain hydrocarbon gas, such as acetylene and methane, and an aromatic hydrocarbon, such as benzene, toluene, and xylene, can be used.

### (b) Wet mixing method

In the wet mixing method, for example, a carbon precursor, such as coal pitch, petroleum pitch, and tar, is dissolved in a solvent, and the resultant solution is mixed with silicon particles, and dried. Then, the silicon particles coated with the carbon precursor are heated in an inert gas atmosphere at, for example, 600 °C or lower and 1000 °C or lower, to carbonize the carbon precursor, and thus, a carbon phase is formed.

### (i-iii) Synthesis of lithium silicate composite particles

A raw material of the silicate phase is prepared.

As the raw material of the silicate phase, a raw material mixture containing a Si raw material and a Li raw material in a predetermined ratio is used. By melting the raw material mixture and passing the melt between metal rolls into flakes, a silicate can be obtained. Without melting the raw material mixture, a silicate may be synthesized through a solid phase reaction by baking the mixture at a temperature below the melting point.

As the Si raw material, a silicon oxide (e.g., SiO₂) can be used. As the Li raw material or a raw material of element M, a carbonate, oxide, hydroxide, hydride, nitrate, sulfate, or the like of lithium or element M, respectively, can be used. Preferred among them are a carbonate, an oxide, a hydroxide, and the like.

Next, the silicate is blended with silicon particles at least part of surfaces of which is coated with a carbon phase (hereinafter sometimes referred to as carbon-coated silicon particles), and the two are mixed. For example, lithium silicate composite particles are produced through the following processes.

First, the carbon-coated silicon particles and silicate powder are mixed in a mass ratio of, for example, 20:80 to 95:5.

Next, the mixture of the carbon-coated silicon particles and the silicate is stirred using an apparatus like a ball mill. At this time, it is preferable to add an organic solvent to the mixture, to perform wet mixing. A predetermined amount of the organic solvent may be put all at once into a pulverizer vessel at the beginning of the pulverization, or may be put dividedly in a plurality of times into the vessel in the course of pulverization. The organic solvent serves to prevent an object to be pulverized from adhering onto the inner wall of the vessel. As the organic solvent, an alcohol, an ether, a fatty acid, an alkane, a cycloalkane, a silicate ester, a metal alkoxide, and the like can be used.

Subsequently, the mixture is heated under pressure, for example, in an inert gas atmosphere (e.g., an atmosphere of argon, nitrogen, etc.) at a temperature of 450 °C or higher and 1000 °C or lower, to be sintered. For sintering, a sintering apparatus capable of applying pressure in an inert atmosphere, such as a hot press and a discharge plasma sintering furnace, can be used. During sintering, the silicate melts and flows so as to fill the gaps between the silicon particles. As a result, a dense block of sintered body including the silicate phase as a sea and particulate silicon phases as islands can be obtained.

Finally, pulverizing the resultant sintered body can provide lithium silicate composite particles. Lithium silicate composite particles having a predetermined average particle diameter can be obtained by appropriately selecting the pulverization conditions.

### (i-iv) Covering of lithium silicate composite particles with carbon coating

Next, at least part of the surfaces of the lithium silicate composite particles is covered with a carbon coating. The carbon material contained in the first coating is derived from this carbon coating.

As a method for forming a carbon coating on the surfaces of the lithium silicate composite particles, for example, a chemical vapor deposition method using a chain hydrocarbon gas, such as acetylene and methane, as a raw material; a method of mixing coal pitch, petroleum pitch, phenol resin, or the like with the lithium silicate composite particles, and heating the mixture to be carbonized; and other methods can be used. Carbon black may be allowed to adhere onto the surfaces of the lithium silicate composite particles.

The carbon coating is preferably thin enough not to substantially influence the average particle diameter of the lithium silicate composite particles. On the other hand, in view of its role as a carbon source for the first coating, the carbon coating preferably has a thickness equal to or greater than a desired thickness of the first coating. The thickness of the carbon coating may be 0.1 nm or more, and may be 1 nm or more. In view of the diffusibility of lithium ions, the thickness of the carbon coating is preferably 300 nm or less, more preferably 200 nm or less. The thickness of the carbon coating, like that of the first coating, can be measured by cross-sectional observation of the lithium silicate composite particles using a SEM or TEM.

Finally, a step of washing the lithium silicate composite particles having a carbon coating with an acid may be performed. For example, washing the composite particles with an acidic aqueous solution can remove alkaline components that may be present in small amount on the surfaces of the lithium silicate composite particles. The acidic aqueous solution that can be used include: an aqueous solution of an inorganic acid, such as hydrochloric acid, hydrofluoric acid, sulfuric acid, nitric acid, phosphoric acid, and carbonic acid; and an aqueous solution of an organic acid, such as citric acid and acetic acid.

### (ii) First coating formation step (S12)

The lithium silicate composite particles having a carbon coating are exposed to a gas phase containing a first element. By this, the first element is introduced into the carbon coating, and a first coating containing an oxide of the first element and a carbon material is formed on at least part of the surfaces of the lithium silicate composite particles.

As a gas phase method, for example, CVD, ALD, physical vapor deposition (PVD), and other methods can be used. In particular, an ALD method is preferred because the first coating can be formed at a relatively low temperature. According to the ALD method, the first coating can be formed in an atmosphere of 200 °C or lower.

In the ALD method, an organic metal compound (precursor) containing a first element is used as a raw material for the first coating. In the ALD method, a raw material gas containing the vaporized precursor and an oxidant are alternately fed into a reaction chamber in which an object is placed. This forms a layer containing an oxide of the first element on the surface of the object.

At least part of the surface of the lithium silicate composite particles which are the object is covered with a carbon coating. The first element contained in the raw material gas can pass through the carbon coating and reach the surface of the lithium silicate composite particles. The first element then deposits, as it is, on the surface of the lithium silicate composite particles. Therefore, the first element is distributed more abundantly as closer to the surface of the lithium silicate composite particles. The first coating thus formed contains a carbon material derived from the carbon coating, together with the oxide of the first element. Of the surface of the lithium silicate composite particles which are the object, in a portion not covered with the carbon coating, the first element contained in the raw material gas is deposited on the surface of the lithium silicate composite particles.

According to the ALD method that allows self-limiting film growth, the first element can deposit at the atomic layer level on a surface of the object. In the ALD method, the thickness of the first coating is controlled by the number of cycles, each cycle consisting of: raw material gas feeding (pulsing) -> raw material gas exhausting (purging) -> oxidant feeding (pulsing) -> oxidant exhausting (purging). In the ALD method, one cycle may consist of oxidant feeding (pulsing) -> oxidant exhausting (purging) -> raw material gas feeding (pulsing) -> raw material gas exhausting (purging). When the thickness of the first coating is controlled to be approximately the same as that of the carbon coating, the oxide of the first element can be distributed throughout the entire carbon coating, although there is a concentration gradient. When the thickness of the first coating is controlled to be smaller than that of the carbon coating, the first coating containing an oxide of the first element and a carbon material is formed near the surface of the lithium silicate composite particles, and a second coating derived from the remainder of the carbon coating is formed at a position further away from the surface of the lithium silicate composite particles than the first coating.

The precursor is an organic metal compound containing a first element. As the precursor, various kinds of organic metal compounds conventionally used in the ALD method can be used.

Examples of the precursor containing Ti include bis(t-butylcyclopentadienyl)titanium(IV) dichloride (C₁₈H₂₆Cl₂Ti), tetrakis(dimethylamino)titanium(IV) ([(CH₃)₂N]₄Ti, TDMAT), tetrakis(diethylamino)titanium(IV) ([(C₂H₅)₂N]₄Ti), tetrakis(ethylmethylamino)titanium(IV) (Ti[N(C₂H₅)(CH₃)]₄), titanium(IV)diisopropoxide-bis(2,2,6,6-tetramethyl-3,5-heptanedionate) (Ti[OCC(CH₃)₃CHCOC(CH3)₃]₂(OC₃H₇)₂), titanium tetrachloride (TiCl₄), titanium(IV) isopropoxide (Ti[OCH(CH₃)₂]₄), and titanium(IV) ethoxide (Ti[O(C₂H₅)]₄). Examples of the precursor containing Al include trimethylaluminum ((CH₃)₃Al, TMA).

The raw material gas may contain a plurality of kinds of precursors. Into the reaction chamber, different kinds of precursors may be fed simultaneously or one after another. Alternatively, the kind of the precursor contained in the raw material gas may be changed for each cycle.

As the oxidant, an oxidant conventionally used in the ALD method can be used. Examples of the oxidant include water, oxygen, and ozone. The oxidant may be fed in the form of a plasma generated from the oxidant into the reaction chamber.

The conditions for the ALD method are not particularly limited. The degree of oxygen vacancies in the oxide of the first element can be controlled by, for example, adjusting the temperature in the reaction chamber (the temperature of the atmosphere containing the precursor or oxidant), the oxidant pulsing time, and the like.

The temperature of the atmosphere containing the precursor or oxidant in the reaction chamber may be, for example, 25 °C or higher and 200 °C or lower, may be 50 °C or higher and 150 °C or lower. From a similar point of view, the pressure in the reaction chamber during processing may be, for example, 1·10⁻⁵ Pa or more and 1·10⁻² Pa or less, and may be 1·10⁻⁴ Pa or more and 1·10⁻³ Pa or less. The raw material gas pulsing time may be 0.01 seconds or more and 5 seconds or less, or may be 0.05 seconds or more and 3 seconds or less. The oxidant pulsing time may be 0.005 seconds and 3 seconds or less.

### E. Production method of electrochemical element

An electrochemical element according to an embodiment the present disclosure includes the above-described first active material. The electrochemical element is obtained by allowing the first active material having a first coating to be supported on a surface of a current collector. The electrochemical element can also be obtained by allowing the lithium silicate composite particles covered with a carbon coating to be supported on a surface of a current collector, and then forming a first coating by a gas phase method.

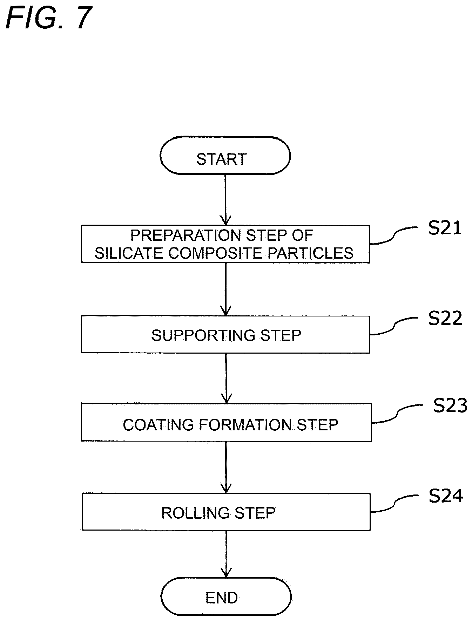

FIG. 7 is a flowchart of a method for producing an electrochemical element according to one embodiment of the present disclosure.

The production method shown in FIG. 7 includes: a preparation step of preparing lithium silicate composite particles each of which contains a silicate phase, and a silicon phase dispersed in the silicate phase, and at least part of surfaces of which is covered with a carbon coating containing a carbon material; a supporting step of allowing the lithium silicate composite particles to be supported on a surface of a current collector; and a coating formation step of exposing the lithium silicate composite particles to a gas phase containing a first element other than non-metallic elements to introduce the first element into the carbon coating, to form an active material layer in which a first coating containing an oxide of the first element and a carbon material is formed on at least part of the surfaces of the lithium silicate composite particles.

### (I) Preparation step of lithium silicate composite particles (S21)

Lithium silicate composite particles covered with a carbon coating are prepared in a similar manner to those in the steps (i-i) to (i-iv) of the preparation step of lithium silicate composite particles in the production method of active material particles.

### (II) Supporting step of lithium silicate composite particles (S22)

A slurry of a negative electrode mixture containing the prepared lithium silicate composite particles in a dispersion medium is applied onto a surface of a current collector, and the slurry is dried. In this way, a precursor of active material layer is formed on the surface of the current collector.

The dispersion medium that can be used include, but not limited to: water; alcohols, such as ethanol; ethers, such as tetrahydrofuran; amides, such as dimethylformamide; N-methyl-2-pyrrolidone (NMP); and mixed solvents thereof.

### (III) First coating formation step (S23)

The current collector having the precursor of active material layer is exposed to a gas phase containing a first element. By this, the first element is introduced into the carbon coating, and at least part of the surfaces of the lithium silicate composite particles contained in the precursor is covered with a first coating containing an oxide of the first element and a carbon material. In this way, an active material layer is formed. As the gas phase method, as mentioned above, an ALD method is preferably used.

As the precursor and the oxidant used in the ALD method, the precursor and the oxidant as described in the step (ii) of forming a first coating in the production method of active material particles can be used.

The conditions for the ALD method are not particularly limited. The temperature of the atmosphere containing the precursor or oxidant, the pressure in the reaction chamber during processing, and the raw material gas pulsing time may be within the ranges of the temperature of the atmosphere containing the precursor or oxidant, the pressure in the reaction chamber during processing, and the raw material gas pulsing time, as described in the step (ii) of forming a first coating in the production method of active material particles.

### (IV) Rolling step (S24)

After the first coating is formed, the active material layer may be rolled. The conditions for rolling are not particularly limited, and may be set as appropriate so that the active material layer has a predetermined thickness or density. This increases the density of the active material layer, leading to an enhanced capacity of the electrochemical device.

In the following, the present disclosure will be specifically described with reference to Examples and Comparative Examples. It is to be noted, however, the present disclosure is not limited to the following Examples.

### <<Example 1>>

### [Preparation of negative electrode]

### (1) Preparation of silicon particles

Coarse particles of silicon (3N, average particle diameter: 10 µm) were packed in a pot (made of SUS, volume: 500 mL) of a planetary ball mill (P-5, available from Fritsch Co., Ltd.), together with 24 SUS balls (diameter: 20 mm), and with the lid closed, pulverized in an inert atmosphere at 200 rpm until the average particle diameter became 150 nm. Silicon particles were thus prepared.

### (2) Coating of silicon particles with carbon phase

A carbon material was allowed to deposit on the surfaces of the silicon particles by chemical vapor deposition. Specifically, the silicon particles were introduced into an acetylene gas atmosphere and heated at 700 °C, so that the acetylene gas was thermally decomposed and allowed to deposit on the surfaces of the silicon particles, thereby to form a carbon phase. The amount of the carbon material relative to 100 parts by mass of the silicon particles was 10 parts by mass.

### (3) Preparation of lithium silicate composite particles

Silicon dioxide and lithium carbonate were mixed in an atomic ratio (= Si/Li) of 1.05, and the mixture was baked in the air at 950 °C for 10 hours, to give a lithium silicate represented by Li₂Si₂O₅ where z = 0.5. The resultant lithium silicate was pulverized to have an average particle diameter of 10 µm.

The lithium silicate (Li₂Si₂O₅) with an average particle diameter 10 µm and carbon-coated silicon were mixed in a mass ratio of 70:30. The mixture was packed in a pot (made of SUS, volume: 500 mL) of a planetary ball mill (P-5, available from Fritsch Co., Ltd.), together with 24 SUS balls (diameter: 20 mm), and with the lid closed, the mixture was pulverized in an inert atmosphere at 200 rpm for 50 hours.

Next, the powdery mixture was taken out in an inert atmosphere and baked, in an inert atmosphere, at 800 °C for 4 hours with a pressure applied by a hot press, to give a sintered body of the mixture. Then, the sintered body was pulverized, to obtain lithium silicate composite particles.

The crystallite size of the silicon phase calculated using the Scherrer formula from a diffraction peak belonging to the Si (111) plane obtained by XRD analysis was 15 nm. In the silicate phase, the Si/Li ratio was 1.0, and the Li₂Si₂O₅ content measured by Si-NMR was 70 mass% (the silicon phase content was 30 mass%).

### (4) Covering of lithium silicate composite particles with carbon coating

After passed through a 40-µm mesh, the obtained lithium silicate composite particles were mixed with coal pitch (MCP250, available from JFE Chemical Corporation), and the mixture of the lithium silicate composite particles and the pitch was baked at 800 °C for 5 hours in an inert atmosphere, to form a carbon coating on the surfaces of the lithium silicate composite particles. The coating amount of the carbon coating was set to 5 mass% relative to the total mass of the lithium silicate composite particles and the carbon coating. Then, using a sieve, 10-µm-average-diameter particles including the lithium silicate composite particles and the carbon coating formed on the surfaces thereof were separated. The thickness of the carbon coating was 50 nm.

### (5) Preparation of negative electrode precursor

The lithium silicate composite particles provided with the carbon coating and a second active material (graphite) were mixed in a mass ratio of 5:95, and used as a negative electrode active material. To a negative electrode mixture containing the negative electrode active material, sodium carboxymethylcellulose (CMC-Na), styrene-butadiene rubber (SBR), and lithium polyacrylate in a mass ratio of 96.5:1:1.5:1, water was added, and then, stirred in a mixer (T.K. HIVIS MIX, available from PRIMIX Corporation), to prepare a negative electrode slurry. Next, the negative electrode slurry was applied onto a surface of a copper foil so that the mass of the negative electrode mixture per 1 m² was 190 g, and the applied film was dried, to prepare a negative electrode precursor having a density of 1.5 g/cm³ formed on both surfaces of the copper foil. The thickness of the negative electrode active material layer in the negative electrode precursor was 202 µm.

### (6) Formation of first and second coatings

The negative electrode precursor was placed in a predetermined reaction chamber, and, using an ALD method, a first coating was formed on the surface of the negative electrode precursor by the following procedures.

An oxidant (H₂O) was vaporized and fed into the reaction chamber containing the negative electrode precursor. The pulsing time was set to 0.005 seconds. The temperature of the atmosphere containing the oxidant in the reaction chamber was controlled to 150 °C, and the pressure was controlled to 260 Pa. After 30 seconds, the excess oxidant was purged with nitrogen gas.

Next, a precursor (TDMAT) serving as a supply source of the first element (Ti) was vaporized and fed into the reaction chamber containing the negative electrode precursor. The pulsing time was set to 0.1 seconds. The temperature of the atmosphere containing the precursor in the reaction chamber was controlled to 150 °C, and the pressure was controlled to 260 Pa. After 30 seconds, on the assumption that the surface of the negative electrode precursor has been covered with a monomolecular layer of the precursor, the excess precursor was purged with nitrogen gas.

A series of operations each consisting of feeding and purging of oxidant and feeding and purging of precursor were repeated 22 times in total, to form a first coating containing titanium. The thickness of the first coating was adjusted to be thinner than the carbon coating, thereby to simultaneously form the first coating and a second coating covering the first coating.

The first and second coatings were analyzed by SEM, EDS, ICP, and the like. The first coating contained Ti and C. The second coating contained C. The thickness T1_{A} of the first coating was 5 nm. The thickness T2_{A} of the second coating was 45 nm. The XANES analysis confirmed that the first coating contained a Ti-containing oxide which had a crystal structure with oxygen vacancies. The value x in TiO₂₋ₓ was about 0.1.

After the formation of the first coating and the second coating, the negative electrode active material layer was rolled, to obtain a negative electrode.

### [Preparation of positive electrode]

To a positive electrode mixture containing lithium cobalt oxide, acetylene black, and polyvinylidene fluoride in a mass ratio of 95:2.5:2.5, N-methyl-2-pyrrolidone (NMP) was added, and then, stirred in a mixer (T.K. HIVIS MIX, available from PRIMIX Corporation), to prepare a positive electrode slurry. Next, the positive electrode slurry was applied onto a surface of an aluminum foil, and the applied film was dried, followed by rolling, to produce a positive electrode having a positive electrode active material layer having a density of 3.6 g/cm³ formed on both surfaces of the aluminum foil. The thickness of the positive electrode active material layer was 138 µm.

### [Preparation of liquid electrolyte]

A liquid electrolyte was prepared by dissolving LiPF₆ at a concentration of 1.0 mol/L in a mixed solvent containing ethylene carbonate (EC) and diethyl carbonate (DEC) in volume ratio of 3:7.

### [Fabrication of secondary battery]

With a tab attached to each electrode, the positive electrode and the negative electrode were wound spirally with a separator interposed therebetween such that the tab was positioned at the outermost layer, thereby to form an electrode group. The electrode group was inserted into an outer body made of aluminum laminated film and dried under vacuum at 105 °C for two hours. Thereafter, the liquid electrolyte was injected, and the opening of the outer body was sealed. A secondary battery A1 was thus fabricated.

### «Example 2»

A first active material was produced and a secondary battery A2 were fabricated in the same manner as in Example 1 except that, in the formation of the first and second coatings (6), a series of operations each consisting of feeding and purging of oxidant and feeding and purging of precursor were repeated 44 times in total.

The first coating contained Ti and C. The thickness T1_{A} of the first coating was 10 nm, and the thickness T2_{A} of the second coating was 40 nm. The XANES analysis confirmed that the first coating contained a Ti-containing oxide which had a crystal structure with oxygen vacancies. The value x in TiO₂₋ₓ was about 0.1.

### «Example 3»

A first active material was produced and a secondary battery A3 were fabricated in the same manner as in Example 1 except that, in the formation of the first and second coatings (6), trimethylaluminum was used as the precursor serving as a supply source of the first element (Al).

The first coating contained Al and C. The thickness T1_{A} of the first coating was 5 nm, and the thickness T2_{A} of the second coating was 45 nm. The XANES analysis confirmed that the first coating contained an Al-containing oxide which had a crystal structure with oxygen vacancies. The value y in AlO_{1.5-y} was about 0.1.

### «Example 4»

In the formation of the first and second coatings (6), trimethylaluminum was used as the precursor serving as a supply source of the first element (Al). The temperature of the atmosphere containing the oxidant in the reaction chamber was set to 120 °C. The temperature of the atmosphere containing the precursor in the reaction chamber was set to 120 °C. A series of operations each consisting of feeding and purging of oxidant and feeding and purging of precursor were repeated 44 times in total.

Except for the above, in the same manner as in Example 1, a first active material was produced and a secondary battery A4 were fabricated.

The first coating contained Al and C. The thickness T1_{A} of the first coating was 10 nm, and the thickness T2_{A} of the second coating was 40 nm. The XANES analysis confirmed that the first coating contained an Al-containing oxide which had a crystal structure with oxygen vacancies. The value y in AlO_{1.5-y} was about 0.1.

### <<Comparative example 1>>

An active material was produced and a secondary battery B1 were fabricated in the same manner as in Example 1 except that the formation of the first and second coatings (6) was not performed. The active material was covered with a carbon coating having a thickness of 50 nm.

### <<Comparative Example 2»

In the formation of the first and second coatings (6), the pulsing time in vaporizing and feeding an oxidant (H₂O) was set to 0.015 seconds. The temperature of the atmosphere containing the oxidant in the reaction chamber was set to 200 °C. The temperature of the atmosphere containing the precursor in the reaction chamber was set to 200 °C.

Except for the above, in the same manner as in Example 1, a first active material was produced and a secondary battery B2 were fabricated.

The thickness T1_{A} of the first coating was 5 nm, and the thickness T2_{A} of the second coating was 45 nm. The XANES analysis confirmed that the Ti-containing oxide in the first coating had a crystal structure without oxygen vacancies. The value x in TiO₂₋ₓ was zero.

### <<Comparative Example 3»

In the formation of the first and second coatings (6), the pulsing time in vaporizing and feeding an oxidant (H₂O) was set to 0.015 seconds. The temperature of the atmosphere containing the oxidant in the reaction chamber was set to 200 °C. The temperature of the atmosphere containing the precursor in the reaction chamber was set to 200 °C. A series of operations each consisting of feeding and purging of oxidant and feeding and purging of precursor were repeated 44 times in total.

Except for the above, in the same manner as in Example 1, a first active material was produced and a secondary battery B3 were fabricated.

The thickness T1_{A} of the first coating was 10 nm, and the thickness T2_{A} of the second coating was 40 nm. The XANES analysis confirmed that the first coating contained a Ti-containing oxide which had a crystal structure without oxygen vacancies. The value x in TiO₂₋ₓ was zero.

The batteries of Examples and Comparative Examples fabricated above were each subjected to the following evaluations.

### [Evaluation of rate characteristics: Measurement of (1C capacity / 0.1C capacity)]

At 25 °C, a constant-current charge was performed at a current of 1C until the voltage reached 4.2 V, and then, a constant-voltage charge was performed at a voltage of 4.2 V until the current reached 1/20C. After a rest for 10 minutes, at 25 °C, a constant-current discharge was performed at a current of 1C until the voltage reached 2.5 V, and the discharge capacity at this time was determined as a 1C capacity.

At 25 °C, a constant-current charge was performed at a current of 1C until the voltage reached 4.2 V, and then, a constant-voltage charge was performed at a voltage of 4.2 V until the current reached 1/20C. After a rest for 10 minutes, at 25 °C, a constant-current discharge was performed at a current of 0.1C until the voltage reached 2.5 V, and the discharge capacity at this time was determined as a 0.1C capacity. The ratio (1C capacity / 0.1C capacity) of the 1C capacity to the 0.1C capacity was calculated.

### [Evaluation of cycle characteristics: Measurement of capacity retention rate]

Charge and discharge were performed repeatedly under the following conditions.

### <Charge>

At 25 °C, a constant-current charge was performed at a current of 1C until the voltage reached 4.2 V, and then, a constant-voltage charge was performed at a voltage of 4.2 V until the current reached 1/20C.

### <Discharge>

A 25 °C, a constant-current discharge was performed at a current of 1C until the voltage reached 2.5 V.

The rest time between charge and discharge was set to 10 minutes. The ratio of the discharge capacity at the 100th cycle to the discharge capacity at the 1st cycle was determined as a capacity retention rate.

The evaluation results are shown in Table 1.

**[Table 1]**

| Battery | Oxide of first element | Oxygen vacancies | Thickness T1_{A} of first coating (nm) | Evaluation of rate characteristics | Evaluation of cycle characteristics |
|---|---|---|---|---|---|
| | | | | 1C capacity /0.1C capacity | Capacity retention rate (%) |
| A1 | TiO₂₋ₓ | With | 5 | 0.62 | 91 |
| A2 | TiO₂₋ₓ | With | 10 | 0.60 | 92 |
| A3 | AlO_{1.5-y} | With | 5 | 0.60 | 90 |
| A4 | AlO_{1.5-y} | With | 10 | 0.59 | 90 |
| B1 | - | - | | 0.57 | 87 |
| B2 | TiO₂ | Without | 5 | 0.54 | 89 |
| B3 | TiO₂ | Without | 10 | 0.47 | 90 |

In the batteries A1 to A4, in which the lithium silicate composite particles were covered with the first coating containing an oxide of a first element with oxygen vacancies and a carbon material, the capacity retention rate and (1C capacity / 0.1C capacity) were high, and excellent cycle characteristics and rate characteristics were achieved.

On the other hand, in the battery B1, in which the lithium silicate composite particles were not covered with the first coating containing an oxide of a first element with oxygen vacancies and a carbon material, the cycle characteristics were significantly deteriorated, and the rate characteristics were also deteriorated.

In the batteries B2 and B3, in which the lithium silicate composite particles were covered with the first coating containing an oxide of a first element, the capacity retention rate was higher than that in the battery B1, but due to the lack of oxygen vacancies in the oxide of the first element, the ionic conductivity of the active material particles was low, resulting in the deteriorated rate characteristics.

### [Industrial Applicability]

According to the present disclosure, it is possible to provide an electrochemical device with high capacity and long life. An electrochemical device according to the present disclosure is useful as a main power source for mobile communication equipment, portable electronic equipment, and other similar devices.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug
- 20: active material particle
- 21: silicate phase
- 22: silicon phase
- 23: lithium silicate composite particle
- 24: primary particle
- 26: second coating
- 27: first coating

## Claims

1. Active material particles, comprising:
composite particles each containing a lithium silicate phase, and a silicon phase dispersed in the lithium silicate phase; and
a first coating covering at least part of surfaces of the composite particles, wherein
the first coating contains an oxide of a first element with oxygen vacancies, and a carbon material, and
the first element is an element other than non-metallic elements.

2. The active material particles according to claim 1, wherein the first element includes at least one selected from the group consisting of Al, Ti, Si, Zr, Mg, Nb, Ta, Sn, Ni, and Cr.

3. The active material particles according to claim 1, wherein the oxide of the first element includes an oxide represented by MeO₂₋ₓ, where Me is at least one selected from the group consisting of Ti, Si, Zr, and Sn, and 0 < x ≤ 1.95.

4. The active material particles according to claim 1, wherein the oxide of the first element includes an oxide represented by MeO_{1.5-y}, where Me is Al, and 0 < y ≤ 1.47.

5. The active material particles according to claim 1, wherein the oxide of the first element includes an oxide represented by MeO_{1-z}, where Me is at least one selected from the group consisting of Mg and Ni, and 0 < z ≤ 0.9.

6. The active material particles according to claim 1, wherein the oxide of the first element includes an oxide represented by MeO₃₋ᵤ, where Me is Cr, and 0 < u ≤ 2.1.

7. The active material particles according to any one of claims 1 to 6, wherein a thickness T1_{A} of the first coating is 0.1 nm or more and 50 nm or less.

8. The active material particles according to any one of claims 1 to 7, further comprising: a second coating having electrical conductivity which covers at least part of the first coating and is different from the first coating, wherein
the second coating is substantially free of the oxide of the first element.

9. The active material particles according to claim 8, wherein the second coating contains a carbon material.

10. An electrochemical element, comprising:
a current collector; and an active material layer supported on the current collector, wherein
the active material layer contains the active material particles of any one of claims 1 to 9.

11. An electrochemical device, comprising:
a first electrode; a second electrode; and an electrolyte, wherein
one of the first electrode and the second electrode is constituted of the electrochemical element of claim 10.
